# EUROPEAN PATENT SPECIFICATION

(11) **EP 4 470 734 B1**
(45) Date of publication and mention of the grant of the patent: **10.12.2025**
(21) Application number: 24176860.5
(22) Date of filing: 20.05.2024
(51) Int. Cl.: B25J 15/02, B25J 11/00, B25J 15/00, B65G 47/90

(54) **GRIPPING DEVICE FOR GRIPPING A FOODSTUFF AND CONVEYING APPARATUS PROVIDED WITH SUCH A DEVICE**
GREIFVORRICHTUNG ZUM GREIFEN EINES NAHRUNGSMITTELS UND FÖRDERVORRICHTUNG MIT EINER SOLCHEN VORRICHTUNG
DISPOSITIF DE PRÉHENSION D'UNE DENRÉE ALIMENTAIRE ET APPAREIL DE TRANSPORT MUNI D'UN TEL DISPOSITIF

(30) Priority: 29.05.2023 IT 202300010842
(43) Date of publication of application: 04.12.2024
(73) Proprietor: VE.MA.C. Societa' A Responsabilita' Limitata, 41051 Castelnuovo Rangone (MO) (IT)
(72) Inventor: COSTANTINI, Maurizio, 41057 Spilamberto (MO) (IT)
(74) Representative: Luppi Intellectual Property S.r.l.

(56) References cited:
- EP-B1- 2 394 800
- CA-A1- 2 285 582
- JP-A- 2012 200 806
- JP-A- 2015 131 368
- JP-A- 2015 217 466
- JP-A- H07 251 942
- JP-A- H09 267 284
- JP-A- S6 076 983
- JP-A- S6 099 584
- JP-A- S6 471 684
- JP-B2- 3 119 336
- JP-B2- 4 224 936
- US-A1- 2012 086 226

## Description

### Background of the invention

The invention relates to a gripping device configured to grasp and contain a foodstuff, in particular a cured meat such as a piece of *speck* or a piece of bacon or a ham, in particular a raw ham. In particular, the gripping device according to the invention is configured to pick up a foodstuff from a support plane defined by conveying means on which the foodstuff is placed.

The invention also relates to a conveying apparatus for conveying a foodstuff including such a gripping device and a conveying robot equipped with an arm connected to the gripping device to move the gripping device, and thus the foodstuff, along a conveying path.

In particular, the gripping device according to the invention is configured to pick up a foodstuff from the conveying means, for example from a conveyor belt, provided in a picking-up station and contain and support the foodstuff internally whilst the gripping device is conveyed, for example by the conveying apparatus according to the invention, to an unloading or release station in which the foodstuff is unloaded by the gripping device for example into a storage container.

### Background of the invention

In a cured meat processing line for processing for example, pieces of *speck,* pieces of bacon or hams, in particular raw hams, subjecting pieces of animal meat, in particular pig meat, to a plurality of processes is known, and it is known to arrange each piece of meat on a roller conveyor belt from which an operator takes one piece at a time to move the piece, still manually, to a storage container where the pieces of meat are collected before being subjected to successive processing or before being matured or before being marketed. The pieces of meat are divided into several storage containers on the basis of the weight of each piece of meat so that each storage container contains pieces of meat having a similar weight, i.e. the pieces of meat arranged in the same storage container differ from one another in weight by a set negligible amount.

The operation of moving the pieces of meat from the conveying means to the storage containers can occur, for example, after the piece of meat has undergone salting or before undergoing salting, which can occur, for example, inside the storage containers.

This movement operation is very tiring and repetitive for the operator, requiring, in addition, a lot of time to be performed because of the significant weight of the pieces of meat.

Hooking devices are known from the prior art for hooking the pieces of meat, each of which is arranged in particular to hook a raw ham to a maturing frame.

One embodiment of these hooking devices is shown by document GB 406793 A that describes a device for hanging meat comprising jaws provided with teeth and connected to arms hinged together in a connecting zone, and a sliding element carrying a wedge at the lower end of which a pair of tilted flanges is engaged. Each flange is integral with a respective arm so that the weight of the meat, by tending to drag the wedge to the connecting zone, closes the jaws with a force that increases with the weight of the meat.

One drawback of such hooking devices is that they leave marks in the piece of meat that they hook, which marks are due to the teeth of the jaws that penetrate the meat and remain evident even if the time spent inside the hooking device is not very long, thus damaging the appearance of the piece of meat.

Another drawback of such hooking devices is that they do not allow the pieces of meat to be picked up from conveying means, but the pieces of meat have to be arranged manually by an operator between the jaws of these hooking devices.

Other prior-art hooking/gripping devices are known from JPS6471684 A, JP2015217466 A, JPH09267284 A, JP2015131368 A and from US2012/086226 A1.

### Summary of the invention

One object of the invention is to improve gripping devices for gripping a foodstuff of known type.

Another object of the invention is to obtain a gripping device for gripping a foodstuff that enables a piece of meat to be grasped from conveying means.

A further object of the invention is to provide a gripping device for gripping a foodstuff that is able to overcome the limits or disadvantages of the prior art.

A still further object is to obtain a gripping device for gripping a foodstuff that enables a foodstuff to be grasped and unloaded automatically or in a robotized manner.

A further object of the invention is to provide a gripping device that does not leave evident marks on the pieces of meat that it grasps.

Still another object is to provide a conveying apparatus that enables a foodstuff to be gripped effectively from a conveying means in a picking-up station, the foodstuff to be conveyed along a set path and to be unloaded in an unloading station.

These objects are achieved by a gripping device according to claim 1 and by a conveying apparatus according to claim 15.

The gripping device according to the invention includes a pair of jaw elements intended to contain laterally the foodstuff and distance adjusting means operationally associated with the pair of jaw elements and configured to adjust and maintain a distance between the jaw elements. The distance between the jaw elements is chosen on the base of the dimensions of the foodstuff to be conveyed. Owing to the distance adjusting means it is possible to contain the foodstuff laterally inside the gripping device but without pressing excessively the foodstuff between the jaw elements.

The gripping device according to the invention further includes at least one group of finger elements designed to support below the foodstuff and drive means configured to drive the at least one group of finger elements between a release/non-operating configuration and a support operating configuration. The group of finger elements includes a plurality of finger elements, each of which is configured to be able to be inserted between components of the conveying means, for example in a space defined between two adjacent rollers of a roller conveyor belt. In this manner, the finger elements can be positioned at a lower height than that of a support plane of the conveying means on which a foodstuff is placed, and, once the gripping device has been moved away from the support plane, i.e. when the foodstuff has been raised from the support plane, they can be brought into contact with a lower portion of the foodstuff and support the foodstuff during movement of the gripping device to an unloading/release station. Owing to the finger elements and to the drive means driving these finger elements it is possible to pick up the foodstuff from the conveying means and contain below the foodstuff during movement of the gripping device away from the conveying means.

After all, owing to the gripping device according to the invention it is possible to pick up a foodstuff, in particular a cured meat, completely automatically and in a robotized manner from conveying means and contain the foodstuff therein effectively and without leaving any permanent mark on the outer surface of the foodstuffs. Further, owing to the conveying apparatus according to the invention equipped with the gripping device according to the invention it is possible to convey the foodstuff from a loading, or picking-up, station, to an unloading or release station without the foodstuff falling down.

As a result, owing to the invention it is thus possible to reduce considerably, if not eliminate, the fatigue to which an operator is subjected who has to move a foodstuff from conveying means to a storage container, because foodstuff handling is automated. This also enables the operations of picking up or moving the foodstuff from the loading, or picking-up, station to the unloading or release station to be speeded up.

The gripping device is extremely compact and can be taken, when not in use, to a rest or non-operational position, with minimal overall dimensions in which the jaw elements are in a near position.

The gripping device and the conveying apparatus according to the invention are easy to make and can be installed or used simply and easily on existing foodstuff-processing lines.

In one embodiment, a gripping device is provided, configured to grasp and contain a foodstuff, in particular a cured meat such as a piece of speck or a piece of bacon or a ham, the gripping device including:
- a pair of jaw elements intended to contain laterally the foodstuff and including a first jaw element and a second jaw element, the first jaw element and the second jaw element being reciprocally connected and being movable in relation to one another;
- distance adjusting means, operationally associated with the pair of jaw elements and configured to adjust and maintain a distance between the first jaw element and the second jaw element, the distance adjusting means being operationally connected to the first jaw element and/or to the second jaw element for moving at least either the first jaw element or the second jaw element so as to take the jaw elements to a set distance and maintain the jaw elements at a set distance;
- at least one group of finger elements intended to support said foodstuff below and including a plurality of finger elements movable between a release/non-operating configuration in which they do not interact with the foodstuff and a support operating configuration in which they support the foodstuff below; the finger elements are arranged near an end zone of the first jaw element and/or of the second jaw element; and
- drive means operationally associated with the at least one group of finger elements and configured to drive the finger elements between the release/non-operating configuration and the support operating configuration.

In one embodiment, a conveying apparatus is provided including at least one gripping device according to the invention and a conveying robot of the foodstuff including a robotic arm connected to the gripping device for moving the gripping device between a picking-up station in which it grasps the foodstuff and a releasing station in which the gripping device releases the foodstuff. The conveying apparatus further includes programmable electronic control means configured to coordinate a movement of a pair of jaw elements of the gripping device and of at least one group of finger elements of the gripping device in accordance with a movement of a robotic arm of the conveying robot between the picking-up station and the releasing station.

### Brief description of the drawings

The invention can be better understood and implemented with reference to the attached drawings, which illustrate an embodiment thereof by way of non-limiting example, in which:
Figure 1 is a perspective top and rear view of a gripping device according to the invention in an open configuration;
Figure 2 is a perspective bottom and front view of the gripping device of Figure 1 in the open configuration;
Figure 3 is a perspective top and front view of the gripping device according to the invention in a closed configuration;
Figure 4 is a top view of the gripping device of Figure 3;
Figure 5 is a front view of the gripping device of Figure 3;
Figure 6 is a side view of the gripping device of Figure 3.

### Detailed description

With reference to the Figures, a gripping device 1 for gripping a foodstuff, in particular a cured meat such as a piece of speck or a piece of bacon or a ham, in particular a raw ham, according to the invention is shown that is configured to grasp and contain the foodstuff. In particular, the gripping device 1 is configured to pick up a foodstuff from a support plane defined in conveying means provided in a processing line for processing the foodstuff and for containing the foodstuff in particular during a movement of the gripping device 1 between a picking-up station provided in a zone of the conveying means in which the foodstuff is grasped by the gripping device 1 and a releasing/unloading station in which the foodstuff is unloaded by the gripping device 1 and, for example, is dropped by gravity inside a storage container.

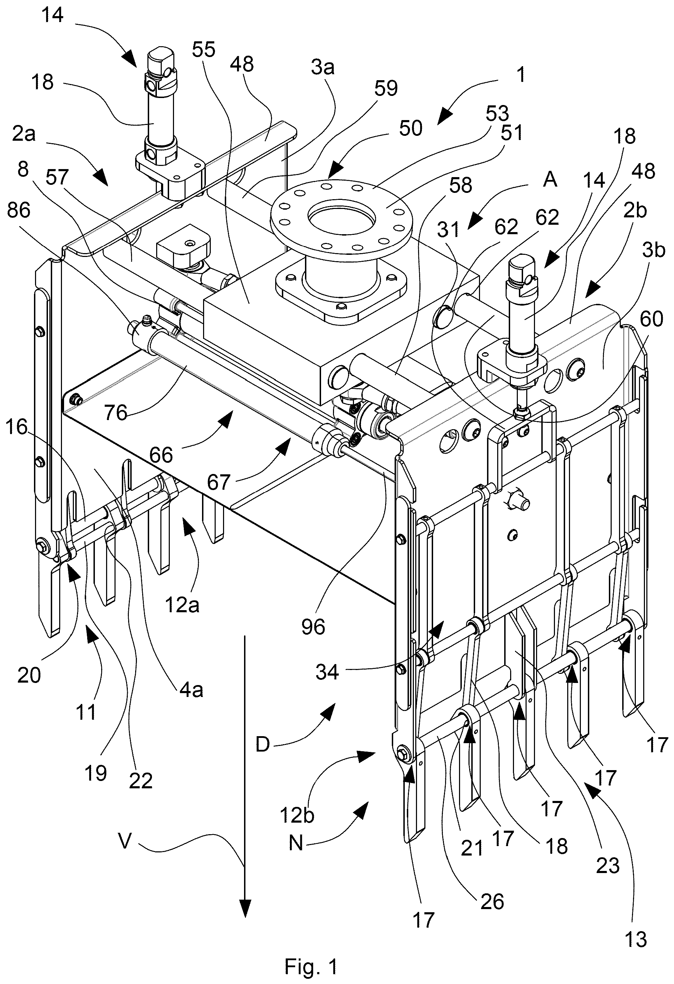

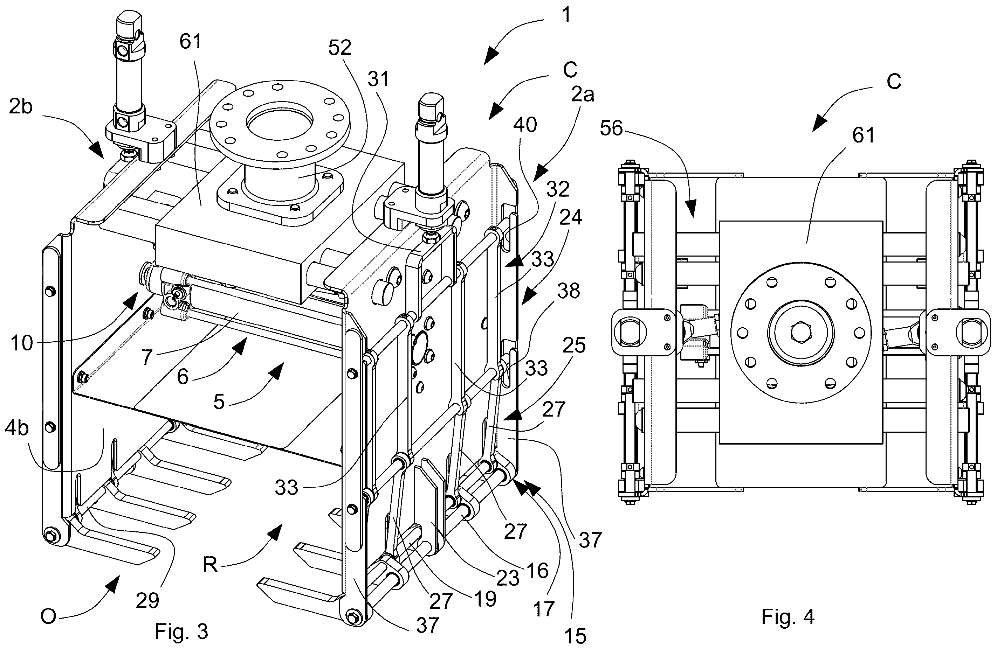

The gripping device 1 is suitable for being arranged, in particular, in an open configuration A, shown for example in Figure 1, in which it is not suitable for containing a foodstuff and a closed configuration C, shown for example in Figure 3, in which it is suitable for containing a foodstuff after, for example, the foodstuff has been picked up from the support plane of the conveying means.

The conveying means can include, for example, a conveyor belt, in particular a roller conveyor belt, a surface of the belt defining a support plane on which the foodstuff is placed before being picked up by the gripping device 1.

The gripping device 1 can be included in a conveying apparatus for conveying a foodstuff according to the invention that is configured to move the gripping device 1 between the picking-up station in which in use the gripping device 1 grasps the foodstuff that can then be contained inside a space of the gripping device 1 and the releasing/unloading station in which the gripping device 1 unloads the foodstuff which can then exit the gripping device 1, for example to be placed in the storage container.

The gripping device 1 includes a pair of jaw elements 2a, 2b intended to contain laterally the foodstuff when picked up by the gripping device 1 from the support plane.

In the open configuration A, the pair of jaw elements 2a, 2b is placed at a greater distance with respect to the dimensions of the foodstuff and therefore, the gripping device 1 is in this configuration not suitable for containing the foodstuff.

The pair of jaw elements includes a first jaw element 2a and a second jaw element 2b, in which the first jaw element 2a and the second jaw element 2b are reciprocally connected and, in use, are movable in relation to one another.

In particular, the first jaw element 2a and the second jaw element 2b are movable between a distanced or non-operational position D, in which the first jaw element 2a and the second jaw element 2b are distanced from, in particular, do not contact, the foodstuff, once picked up, and a near or operational or contact/containing position R, in which the first jaw element 2a and the second jaw element 2b are reciprocally nearer the foodstuff, once picked up, with respect to when the first jaw element 2a and the second jaw element 2b are in the distanced position D.

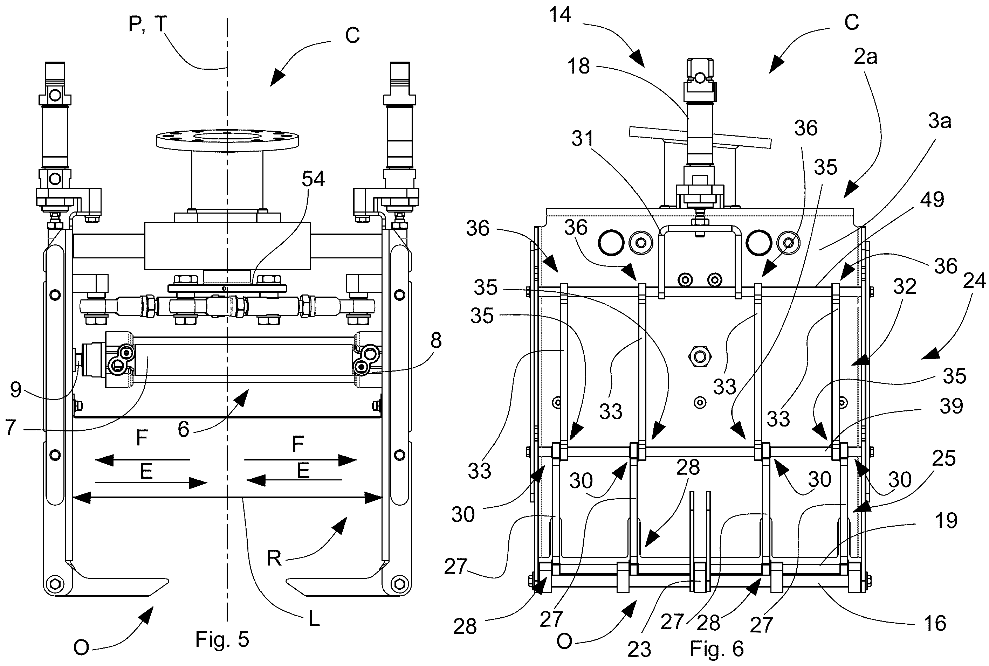

When the first jaw element 2a and the second jaw element 2b are in the distanced position D, they can be in particular, further from a plane P (Figure 5) of the gripping device 1, for example a plane of symmetry of the gripping device 1, with respect to when the first jaw element 2a and the second jaw element 2b are in the near position R.

In the distanced position D, the first jaw element 2a and the second jaw element 2b do not contact the foodstuff, whereas in the near position R the first jaw element 2a and the second jaw element 2b contact and are suitable for containing the foodstuff in a space included therebetween. In other words, in the near position R, the first jaw element 2a and the second jaw element 2b contain the foodstuff laterally.

The first jaw element 2a and the second jaw element 2b can be shaped substantially similarly.

The first jaw element 2a can be fitted substantially specularly to the second jaw element 2b with respect to the plane P.

The first jaw element 2a can include a first plate 3a provided with at least one first flat inner zone 4a intended to contact an outer part of the foodstuff, once picked up. This outer part is, in particular, an outer (side) surface portion of the foodstuff.

Similarly, the second jaw element 2b can include a second plate 3b provided with at least one second flat inner zone 4b designed to contact a further outer part of the foodstuff, once picked up. This further outer part is, in particular, a further outer (side) surface portion of the foodstuff.

In particular, the first flat inner zone 4a and the second flat inner zone 4b are arranged for contacting opposite sides of the foodstuff when the first jaw element 2a and the second jaw element 2b are in the near position R and the foodstuff has been picked up.

The first plate 3a and the second plate 3b can be shaped substantially similarly.

The first plate 3a can be fitted substantially specularly to the second plate 3b with respect to the plane P.

The gripping device 1 further includes distance adjusting means 5, operationally associated with the pair of jaw elements 2a, 2b and configured to adjust and maintain a distance L between the first jaw element 2a and the second jaw element 2b.

In particular, the distance adjusting means 5 is connected stiffly to the first jaw element 2a and to the second jaw element 2b.

The distance L is variable on the basis of the position in which the first jaw element 2a and the second jaw element 2b are arranged. In particular, the distance L will be greater in the distanced position D whereas it will be less in the near position R.

The distance adjusting means 5 is operationally connected to the first jaw element 2a and/or to the second jaw element 2b for moving at least either the first jaw element 2a or the second jaw element 2b so as to take the first jaw element 2a and the second jaw element 2b to a set distance and maintain the first jaw element 2a and the second jaw element 2b at a set distance. In particular, the distance adjusting means 5 is configured to move at least either the first jaw element 2a or the second jaw element 2b for a substantially rectilinear stroke along an approach direction E to decrease the distance L or along a distancing direction F, opposite the approach direction E, to increase the distance L so as to take the first jaw element 2a and the second jaw element 2b to the set distance and to maintain the first jaw element 2a and the second jaw element 2b at the set distance. In other words, the distance adjusting means 5, in use, moves the first jaw element 2a and/or the second jaw element 2b along a substantially horizontal direction, in particular substantially perpendicular to the plane P, in particular substantially perpendicular to the vector associated with the force of gravity.

In one embodiment, as in the embodiment of a gripping device 1 shown in the Figures, both the first jaw element 2a and the second jaw element 2b are movable by the distance adjusting means 5 between the distanced position D and the near position R for a respective substantially rectilinear stroke along a respective approach direction E to decrease the distance L or along a respective distancing direction F, opposite the approach direction E, to increase the distance L so as to take the first jaw element 2a and the second jaw element 2 to the set distance and maintain the first jaw element 2a and the second jaw element 2b at the set distance. The respective approach directions E are opposite in direction, as the respective distancing directions F are.

In the near position R, the first jaw element 2a and the second jaw element 2b are at the set distance that can be substantially the same as a dimension of the foodstuff, or as a dimension of the foodstuff less a set amount ΔL. For example, when the foodstuff is a piece of bacon generally having a substantially parallelepipedon shape, the dimension can be the width (i.e. the greater dimension) of the piece of bacon. A set distance that is so chosen in the near position R enables the foodstuff to be kept tight between the first jaw element 2a and the second jaw element 2b, which contact the foodstuff and press the foodstuff on at least two external surface portions. The set amount ΔL is so chosen that the first jaw element 2a and the second jaw element 2b can lightly press the foodstuff on opposite sides exerting a pressure that is such as not to damage the foodstuff and/or not to leave marks on the foodstuff.

In the embodiment shown in the Figures, the distance adjusting means 5 are operationally associated both with the first jaw element 2a and with the second jaw element 2b and, in use, move both the first jaw element 2a and the second jaw element 2b for a respective substantially rectilinear stroke (i.e. neither the first jaw element 2a or the second jaw element 2b rotate during movement) along a respective approach direction E to decrease the distance L or along a respective distancing direction F, opposite said respective approach direction E, to increase the distance L so as to take the first jaw element 2a and the second jaw element 2b to the set distance and maintain the first jaw element 2a and the second jaw element 2b to the set distance.

The respective approach directions E are reciprocally opposite in direction, as the respective distancing directions F are reciprocally opposite in direction.

The approach directions E are, in particular, substantially perpendicular to the plane P and in a direction facing the plane; the distancing directions F are, in particular, substantially perpendicular to the plane P but in a direction moving away from the plane P.

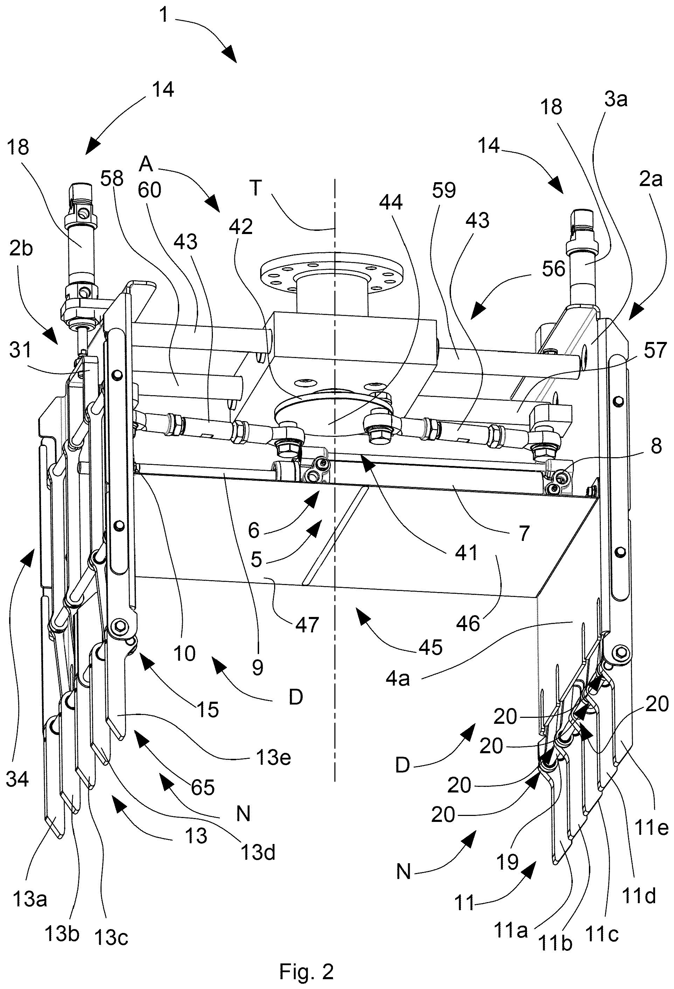

The distance adjusting means 5 can include an actuating device 6 (for example shown in Figure 2) arranged to move away from one another or towards one another the first jaw element 2a and the second jaw element 2b.

The actuating device 6 can be provided with a hollow body 7 including a head 8 operationally associated with, in particular fitted to, one of the jaw elements, for example the first jaw element 2a, and be provided with (at least) a stem 9, or cursor, or tip, an end portion 10 of which is operationally associated with, in particular is designed to contact, the other jaw element, for example the end portion is operationally associated with a second jaw element 2b. In use, the stem 9 is slidable inside the hollow body 7 to move at least the other jaw element, in particular the second jaw element 2b, along the approach direction E or along the distancing direction F.

The distance L between the first jaw element 2a and the second jaw element 2b is thus correlated with the protrusion of the stem 9 outside the hollow body 7.

In the embodiment of a gripping device 1 shown in the Figures, the head 8 is fitted to the first plate 3a of the first jaw element 2a and the end portion 10 of the stem 9 is so fitted as to contact an inner zone of the second plate 3b of the second jaw element 2b, i.e. a zone of the second plate 3b facing the inside of the gripping device 1.

The actuating device 6 can be, in particular, a linear actuating device.

The gripping device 1 can further include distance measuring means 66 (for example shown in Figure 1) arranged for measuring the distance L between the first jaw element 2a and the second jaw element 2b.

Owing to the distance measuring means 66, in use, the distance L can be measured constantly in particular whilst the first jaw element 2a and/or the second jaw element 2b are moved, so as to ensure that the first jaw element 2a and/or the second jaw element 2b are stopped with considerable precision when the distance L coincides with the set distance for a set work step.

In particular, the distance measuring means 66 is connected stiffly to the first jaw element 2a and to the second jaw element 2b.

When the distance measuring means 66 is not provided, it can be the operator who actuates and stops the distance adjusting means 5 so that the distance L substantially coincides with the set distance for a set work step.

The distance measuring means 66 can include a linear movement transducing device 67, like, for example, a potentiometric rod, arranged to detect the distance L, in particular whilst the first jaw element 2a and the second jaw element 2b move reciprocally. For example, in the case of a movement transducer of potentiometric type, the linear movement transducing device 67 is configured to convert the corresponding (linear) movement of the first jaw element 2a with respect to the second jaw element 2b into a variation of a physical parameter, for example an electrical resistance. In other words, in use, the linear movement transducing device 67 generates an output signal that is proportionate to the measurement of a length, i.e. of the distance L.

The linear movement transducing device 67 can be provided with a frame 76, which is in particular hollow, including a first end part 86 operationally associated with, in particular fitted to one of the jaw elements, for example to the first jaw element 2a, and with (at least) a cursor 96, an end portion of which is operationally associated with, in particular is designed to contact, the other jaw element, for example the second jaw element 2b. In use, the cursor 96 is slidable with respect to the frame 76 to which it is connected, for example internally, proportionally to the movement of the first jaw element 2a and/or of the second jaw element 2b along the (respective) approach direction E or along the (respective) distancing direction F.

The distance measuring means 66, in particular the linear movement transducing device 67, can be operationally associated with programmable electronic control means (for example a PLC) that can be provided, for example, in the conveying apparatus equipped with the gripping device 1. For example, the linear movement transducing device 67 can be configured to send to the programmable electronic control means the signal that is proportionate to the measurement of the distance L that it detects.

The programmable electronic control means is configured to control the gripping device 1.

Also, the distance adjusting means 5, in particular the actuating device 6, can be operationally associated with the programmable electronic control means (for example a PLC). In particular, the control means and the distance adjusting means 5 are so configured that the control means can send commands to the distance adjusting means 5 in order for the distance adjusting means 5 to take the distance L to be substantially the same as the set distance that is variable during the work steps of the gripping device 1. For example, the set distance is different in the closed configuration C from the distance in the open configuration A. In other words, in use, the set distance between the first jaw element 2a and the second jaw element 2b can be set by the programmable electronic control means to the distance adjusting means 5, in particular to the actuating device 6.

In particular, the set distance to which the first jaw element 2a and the second jaw element 2b must be taken in the closed configuration C is chosen following a foodstuff classification operation performed on the processing line of the foodstuff that determines the "cut", i.e. the weight and dimensions thereof.

The selection operation is performed, in particular, by a vision system including at least one camera and at least one sensor device, like a weight sensor, by means of which the data concerning each foodstuff are detected, like the dimensions, in particular a maximum length, a maximum width and a maximum thickness, and a weight of the foodstuff.

The operation of classifying the foodstuffs is performed upstream of a work zone in which the gripping device 1 grasps the foodstuffs.

Reaching the set distance is determined, for example, after the programmable electronic control means receives the signal indicating the distance L that the distance measuring means 66 detects continuously in real time during movement of the first jaw element 2a and/or of the second jaw element 2b between the near position R and the distanced position D. When the distance L (measured by the distance measuring means 66) coincides with the set distance that in a certain work step has to be set between the first jaw element 2a and the second jaw element 2b, the programmable electronic control means (or the operator if the latter is not provided) commands the distance adjusting means 5 to interrupt movement of the first jaw element 2a and/or of the second jaw element 2b (i.e. it interrupts sliding of the stem 9 when the actuating device 6 is provided).

The distance adjusting means 5, in particular the actuating device 6, and the distance measuring means 66, in particular the linear position transducing device 67, are respectively connected to the programmable electronic control means by means of connecting means of known type that can include, for example, a wireless connection, one or more transceiver devices, or other components suitable for establishing a connection, for example a wireless connection, between the distance adjusting means 5, in particular the actuating device 6, the distance measuring means 66, in particular the linear movement transducing device 67, and the programmable electronic control means. The previously mentioned connection enables the programmable electronic control means to send data to and/or receive data from the distance adjusting means 5 and/or distance measuring means 66, these transceiver devices or other components being of known type and therefore not being disclosed here in a detailed manner.

The data that can be exchanged between the programmable electronic control means and the distance measuring means 66 are, in particular, set values corresponding to the distance L that the distance adjusting means 5, in particular the actuating device 6, has to impose between the first jaw element 2a and the second jaw element 2b, in the various work steps, for example to be able to grasp the foodstuff, and set values relating to a height to which the gripping device 1 is to be taken in the various work steps, for example to be able to pick up the foodstuff from the support plane of the conveying means, or to be moved from the picking-up station to the releasing station. Also, the data can include the measurement (in particular the signal proportionate to such a measurement) of the distance L detected by the distance measuring means 66.

The values relating to the set distance are based on the data relating to each foodstuff detected by the vision system following the classification operation.

The values relating to the set distance to which the first jaw element 2a and the second jaw element 2b must be taken, in the various work steps, for example in the near position R, are determined, for example, by the operator by a recipe set on the programmable electronic control means by the operator and are based on the dimensions of the foodstuff that the gripping device 1 has to pick up and subsequently convey.

Similarly, also the values relating to the height (i.e. the distance from the ground or from the support plane in the picking-up station, the distance from the ground in the releasing or depositing station) can be determined by the operator by a recipe set on the programmable electronic control means by the operator. Such values are based, in particular, on the height with respect to the ground at which the support plane is arranged and/or on a height of the storage container inside which the foodstuff can be unloaded, in order to avoid collisions therewith.

In use, after receiving the input value of the set distance and after the gripping device 1 has been taken to the picking-up station at a set height, the distance adjusting means 5, in particular the actuating device 6, then has the function of determining a movement for a substantially rectilinear stroke of the first jaw element 2a (and/or of the second jaw element 2b) along the (respective) approach direction E that is useful for not squashing the foodstuff too much.

Owing to the distance measuring means 66, the movement of the first jaw element 2a and/or of the second jaw element 2b caused by the distance adjusting means 5 is such that the end distance L between the first jaw element 2a and the second jaw element 2b is the same as the set distance in a given work step.

The gripping device 1 further includes at least one group of finger elements, for example the group of finger elements 11, intended to support the foodstuff below. The group of finger elements 11 includes a plurality of finger elements 11a,... 11n movable between a release or non-operational configuration N, (shown for example in Figure 1) in which they do not interact with the foodstuff and a support operating configuration O (shown for example in Figure 3) in which they support the foodstuff below.

Each of the finger elements 11a,...11n of the group of finger elements 11 is arranged near an end zone 12a of the first jaw element 2a.

The finger elements 11a,...11n can be arranged equidistant.

The gripping device 1 can further include a further group of finger elements 13 that is shaped, in particular, substantially like the group of finger elements 11.

Similarly to the group of finger elements 11, the further group of finger elements 13 includes a plurality of further finger elements 13a, ..., 13n arranged substantially specularly to the finger elements 11a, ..., 11n and movable, in use, in coordination (for example by the programmable electronic control means) with the latter to promote supporting the foodstuff below in synergy with the finger elements 11a, ..., 11n. Also, the further finger elements 13a,... 13n can be arranged equidistant.

Each of the further finger elements 13a,...13n of the further group of finger elements 13 is arranged near a further end zone 12b of the second jaw element 2b.

An embodiment of a gripping device 1 is shown in the Figures in which both the group of finger elements 11 and the further group of finger elements 13 are present. In this embodiment, the gripping device 1 includes five finger elements 11a, ...11e and five further finger elements 13a, ...13e. In one embodiment that is not shown the number of finger elements 11a, ...11e and the number of further finger elements 13a, ...13e can differ.

In one embodiment that is not shown, one of these groups of finger elements 11, 13 can be missing.

In any case, the dimensions of the finger elements 11a, ..., 11n and/or of the further finger elements 13a, ..., 13n, in particular a length thereof, are so chosen as to be able to support the foodstuff both during gripping of the foodstuff from the support plane by the gripping device 1 and during the movement of the gripping device 1 between the picking-up station and the releasing station.

The gripping device 1 further includes drive means 14 operationally associated with at least one group of finger elements, for example the group of finger elements 11, and configured to drive the finger elements 11a, ..., 11n (and/or the further finger elements 13a,...13n when provided) between the release configuration N and the support operating configuration O.

The drive means 14 is further configured to maintain the group of finger elements 11 and/or the further group of finger elements 13 in the release configuration R or in the support operating configuration O.

In the release configuration N the finger elements 11a, ...11n and/or the further finger elements 13a, ... 13n extend, in particular, along a substantially vertical direction V, in particular downwards, substantially parallel to the vector associated with the force of gravity. The surface of the support plane of the conveying means on which the foodstuff is arranged is, in particular, substantially perpendicular to the vertical direction V.

In the support operating configuration O the finger elements 11a, ...11n and/or the further finger elements 13a, ... 13n extend prevalently, in particular, along a direction that is substantially perpendicular to the vertical direction V.

In particular, the drive means 14 is configured to rotate the finger elements 11a, ...11n and/or the further finger elements 13a, 13n between the release configuration N and the support operating configuration O.

In use, the pair of jaw elements 2a, 2b and at least one group of finger elements, for example the group of finger elements 11, are configured to cooperate in order to grasp and contain in the gripping device 1 the foodstuff when the pair of jaw elements 2a, 2b is in the near position R and at least one group of finger elements is in the support operating configuration O, or in order to unload from the gripping device 1 the foodstuff when the pair of jaw elements 2a, 2b is in the distanced position D and at least one group of finger elements or each group of finger elements is in the release configuration N.

The gripping device 1 can be defined in the open configuration A when the pair of jaw elements 2a, 2b is in the distanced position D and the group of finger elements 11 and/or the further group of finger elements 13, when the latter is present, is in the release configuration N. The open configuration A is adopted by the gripping device 1, in particular, before picking up the foodstuff or when the foodstuff has to be unloaded by the gripping device 1 or after the foodstuff has been unloaded by the gripping device 1.

The gripping device 1, on the other hand, can be defined in the closed configuration C when the pair of jaw elements 2a, 2b is in the near position R and the group of finger elements 11 and/or the further group of finger elements 13, when the latter is present, is in the support operating configuration O. The closed configuration C is adopted by the gripping device 1, in particular, to pick up the foodstuff and when the foodstuff has to be contained inside the gripping device 1 to be able to be conveyed, for example from the picking-up station to the releasing station.

The finger elements 11a, ...11n and the further finger elements 13a, ... 13n each include a respective first end 15 shaped and acting as a cam that is rotatably connected to the drive means 14.

Each first end 15 includes a first zone 17 and a second zone 20 to which the drive means 14 is rotatably connected.

The finger elements 11a, ...11n and the further finger elements 13a, ... 13n each include a respective second end 65, opposite a respective first end 15, that can be tooth shaped.

The drive means 14 includes at least one rotation rod 16 connected to the first zone 17 of the first end 15 of the finger elements 11a, ...11n.

When the further finger elements 13a, ... 13n are present, another rotation rod 26 is provided connected to the first zone 17 of the first end 15 of the further finger elements 13a, ...13n.

The first end 15 of each finger element 11a, ... 11n and of each further finger element 13a, ... 13n is, in use, rotatable around the respective rotation rod 16, 26 when the finger elements 11a, ...11n and the further finger elements 13a, ...13n, when present, are moved between the release configuration N and the support operating configuration O. In other words, the rotation rod 16 and the other rotation rod 26 act as a fulcrum for rotating respectively the finger elements 11a, ... 11n and the further finger elements 13a, ... 13n, when the latter are present.

In particular, rotation of the finger elements 11a, ...11n and of the further finger elements 13a, ... 13n, when the latter are present, around the rotation rod 16 and the other rotation rod 26 and substantially by 90°.

The drive means 14 further includes at least one drive element 18 and a first pulling/pushing rod 19 connected to the second zone 20 of each first end 15 of the finger elements 11a, ...11n.

When also the further finger elements 13a, ...13n are present, another first pulling/pushing rod 29 is provided that is completely alike the first pulling/pushing rod 19, connected to the second zone 20 of the first end 15 of the further finger elements 13a, ... 13n.

The (at least one) drive element 18 is configured to pull or push the first pulling/pushing rod 19 and the other first pulling/pushing rod 29 (when the latter is present) so as to cause a rotation of the finger elements 11a, 11n and of the further finger elements 13a, 13n, when the latter are present, respectively around the rotation rod 16 and the other rotation rod 26, alternatively in one rotation direction (for pulling) or in an opposite direction (for pushing).

The drive element 18 can be a pneumatic actuator, in particular a pneumatic cylinder.

When the gripping device 1 includes both the group of finger elements 11 and the further group of finger elements 13, the gripping device 1 can include only one drive element 18 that drives both the groups of finger elements 11, 13 or a plurality of drive elements 18, for example a drive element 18 for each group of finger elements 11, 13 as in the embodiment illustrated in the Figures.

The drive element 18, or the drive elements 18 are, in particular, fitted to the first plate 3a and/or to the second plate 3b, for example at a folded portion 48 of the first plate 3a and/or of the second plate 3b.

The finger elements 11a,...11n and the further finger elements 13a,...13n can be connected to the rotation rod 16 or to the other rotation rod 26 and to the first pulling/pushing rod 19 or to the other first pulling/pushing rod 29 by means, respectively, of a first hole 21 obtained in the first zone 17 of each finger element 11a,...11n and of each further finger element 13a,...13n, when present, and of a second hole 22 obtained in the second zone 20 of each finger element 11a,...11n and of each further finger element 13a,...13n, when present. In other words, the rotation rod 16 and the other rotation rod 26, when the latter is present, and the first pulling/pushing rod 19 and the other first pulling/pushing rod 29, when the latter is present, are inserted, respectively, into the first holes 21 or into the second holes 22. The coupling between the first holes 21 and the second holes 22 and, respectively, the finger elements 11a,...11n and the further finger elements 13a,...13n, occurs by minimum clearance that at the same time enables the finger elements 11a,...11n and the further finger elements 13a,...13n to rotate around the respective rotation rods 16, 26 and pulling/pushing rods 19, 29, without the finger elements 11a,...11n and the further finger elements 13a,...13n, being able to slide along the rods.

The rotation rod 16 and the other rotation rod 26, when the latter is present, can be connected stiffly respectively to the first plate 3a and to the second plate 3b by means of a respective connecting element 23, for example including a connecting rod.

The drive means 14 further includes at least one system of rods 24 arranged to connect the drive element 18 to the first pulling/pushing rod 19 and to consequently drive the first pulling/pushing rod 19 upwards or downwards according to the pulling or pushing action set by the drive element 18.

When several drive elements 18 are present, it is possible to provide a system of rods identical to the system of rods 24 associated with each drive element 18.

In the embodiment shown in the Figures, the gripping device 1 in fact further includes another system of rods 34, which is identical to the system of rods 24 and is arranged to connect the other drive element 18 to the other first pulling/pushing rod 29.

For the sake of brevity, only the system of rods 24 will be disclosed below. Elements of the other system of rods 34 that are identical in shape and/or function to those of the system of rods 24 will be indicated below and in the drawings by the same reference numbers.

The system of rods 24 can include a first group of rods 25 provided with a plurality of rods 27, such rods 27 each extending with a substantially vertically prevalent dimension and being alongside each other.

Each rod 27 includes a first end zone 28 connected to the first pulling/pushing rod 19 and a second end zone 30, opposite the first end zone 28, connected to a further pulling/pushing rod 39. The further pulling/pushing rod 39 is connected to the drive element 18 in particular by means of a fork element 31 provided in the gripping device 1.

As in the embodiment of a gripping device 1 shown in the Figures, the system of rods 24 can further include a second group of rods 32 provided with a plurality of further rods 33, the further rods 33 each extending with a substantially vertically prevalent dimension and being alongside each other.

Each further rod 33 includes an end 35 connected to the further pulling/pushing rod 39 and a further end 36, opposite the end 35, connected to a still further pulling/pushing rod 49. If also the second group of rods 32 is present, the fork element 31 can be connected to the still further pulling/pushing rod 49.

The first plate 3a and/or the second plate 3b can include each, a pair of flaps 37, the flaps 37 of each pair of flaps being arranged facing one another.

Each flap 37 can extend along an edge of the first plate 3a and/or of the second plate 3b.

Each flap 37 can extend along a height of the first plate 3a and/or of the second plate 3b, in particular along the entire height of the first plate 3a and/or of the second plate 3b.

Each flap 37 can be made by folding a portion of sheet metal that is the precursor of the first plate 3a or of the second plate 3b.

At least one opening 38 is obtained in each flap 37. The openings 38 of a pair of flaps 37 are obtained, and the flaps 37 are so fitted that in the openings 38 two portions of the further pulling/pushing rod 39 can be housed slidingly.

When the still further pulling/pushing rod 49 is present, a further opening 40 can also be obtained in each flap 37. The further openings 40 of a pair of flaps 37 are obtained, and the flaps 37 are fitted, so that in the further openings 40 two portions of the still further pulling/pushing rod 49 can be slidingly housed.

Each opening 38 and/or each further opening 40 can have a substantially L-shaped plan view.

The rotation rod 16 and the other rotation rod 26, when the latter is present, are rotatably connected, in particular at the respective ends, to a pair of facing flaps 37.

In use, when the finger elements 11a,...11n and the possible further finger elements 13a, ... 13n are driven by the drive means 14 between the release configuration N and the support operating configuration O, the further pulling/pushing rod 39 and the still further pulling/pushing rod 49 are caused to slide respectively inside the openings 38 and the further openings 40. In particular, when the drive means 14 drives the finger elements 11a,...11n and the possible further finger elements 13a, ... 13n from the release configuration N to the support operating configuration O, the further pulling/pushing rod 39 and the still further pulling/pushing rod 49 slide upwards under the pulling action of the drive means 14 respectively inside the openings 38 and the further openings 40, whilst when the drive means 14 drives the finger elements 11a,... 11n and the possible further finger elements 13a, ... 13n from the support operating configuration O to the release configuration N, the further pulling/pushing rod 39 and the still further pulling/pushing rod 49 slide downwards under the thrust action of the drive means 14, i.e. along a direction substantially parallel to the vertical direction V, respectively inside the openings 38 and the further openings 40.

In the release configuration N, the further pulling/pushing rod 39 and the still further pulling/pushing rod 49 are arranged, in particular, resting on a portion of the openings 38 and of the further openings 40, respectively.

When both the first jaw element 2a and the second jaw element 2b are moved by the distance adjusting means 5 between the distanced position D and the near position R along a respective stroke, the gripping device 1 can further include a centring unit 41 configured to ensure that the stroke travelled by the first jaw element 2a and the stroke travelled by the second jaw element 2b are substantially the same. Owing to the centring unit 41, the foodstuff, when it is picked up from a support plane, can be grasped by the first jaw element 2a and by the second jaw element 2b arranged in the near position R at the set distance on the basis of a dimension of the foodstuff to be picked up, for example a width, without entailing sliding of the foodstuff with respect to the first jaw element 2a or to the second jaw element 2b. This enables the possibility of the foodstuff falling from the support plane to be prevented.

The centring unit 41 can include, in one embodiment of a gripping device 1 like the one shown in the Figures, a rotating table 42 that is rotatable around a substantially vertical rotation axis T, and a pair of tie rods 43, each tie rod 43 being connected rotatably on one side to the rotating table 42, in particular to a face 44 of the rotating table 42, and on the other side to a respective jaw element 2a, 2b, in particular to the first plate 3a or to the second plate 3b. The rotating table 42 is rotated when the first jaw element 2a and the second jaw element 2b are driven to move along the respective stroke by the distance adjusting means 5. The tie rods 43 are fitted to the face 44 of the rotating table 42 so as to enable a movement of the first jaw element 2a and of the second jaw element 2b by an equal amount.

The rotating table 42 can have a disc shape.

The rotating table 42 can include a further face 54, opposite the face 44, by which the rotating table 42 is connected to a support block 55, in turn connected to the first jaw element 2a and to the second jaw element 2b by sliding support means 56.

In use, when the first jaw element 2a and the second jaw element 2b are moved away from one another along the distancing directions F, the rotating table 42 rotates around the rotation axis T in a rotation direction, whereas when the first jaw element 2a and the second jaw element 2b are brought near one another along the approach directions E, the rotating table 42 rotates around the rotation axis T in an opposite rotation direction, because of the fact that the tie rods 43 are dragged to move as a result of the movement of the first jaw element 2a and of the second jaw element 2b.

The sliding support means 56 and the support block 55 are configured to connect the first jaw element 2a to the second jaw element 2b. In particular, the sliding support means 56 and the support block 55 are configured to slidingly support and guide the first jaw element 2a and the second jaw element 2b when they are moved along a substantially horizontal direction (to the first jaw element 2a and/or to the second jaw element 2b), i.e. when they are moved along the approach direction E or along the distancing direction F between the distanced position D and the near position R.

The sliding support means 56 includes a first support rod 57 connected in a fixed manner on one side, in particular at one end, to the first jaw element 2a, in particular to an inner part of the first plate 3a, and on the other side being slidingly received inside the support block 55. The sliding support means 56 further includes a second support rod 58 connected in a fixed manner on one side, in particular at one end, to the second jaw element 2b, in particular to an inner part of the second plate 3b, and on the other side being slidingly received inside the support block 55.

The sliding support means 56 can further include a further first support rod 59, which is identical to the first support rod 57.

The sliding support means 56 can further include a further second support rod 60, which is identical to the second support rod 58.

The support block 55 includes a body 61 in which a plurality of through holes 62 is obtained each of which is designed to slidingly receive a portion of the first support rod 57, of the second support rod 58, of the further first support rod 59 and of the further second support rod 60, where these rods are provided.

In order to reinforce the mechanical structure of the gripping device 1, in one embodiment, still further support rods can be provided that are identical to those disclosed previously.

In use, the first support rod 57, the second support rod 58, the further first support rod 59, the further second support rod 60 and the still further support rods, when present, slide inside the respective through holes 62 depending on the set distance to which the first jaw element 2a and the second jaw element 2b are taken by the distance adjusting means 5.

In another embodiment of a gripping device 1, not shown in the Figures, the centring unit 41 can include a ring gear, in particular a cogwheel that is rotatable around a substantially vertical rotation axis, and a pair of linear gears, in particular a pair of racks. Each linear gear is provided with a plurality of teeth arranged for engaging a plurality of further teeth provided in the ring gear. Each linear gear is coupled on one side with the ring gear and on the other side is connected to a respective jaw element 2a, 2b. The ring gear is rotated when the first jaw element 2a and the second jaw element 2b are moved for the respective stroke by the distance adjusting means 5. The linear gears are coupled with the ring gear so as to enable a movement of the first jaw element 2a and of the second jaw element 2b for an equal stroke.

The gripping device 1 can further include a cover device 45 arranged to cover from above the foodstuff when the gripping device 1 has grasped the foodstuff, i.e. when the first jaw element 2a and the second jaw element 2b are in the near position R.

The cover device 45 includes at least one first cover plate 46 fitted to either the first plate 3a or the second plate 3b, for example the first plate 3a. The first cover plate 46 can be fitted so as to be substantially perpendicular to the vertical direction V when the gripping device 1 is in the closed configuration C.

In the embodiment of a gripping device 1 shown in the figures, the gripping device 1 further includes a second cover plate 47 fitted to one of the first plate 3a or second plate 3b to which first cover plate 46 is not fitted, for example to the second plate 3b. Also, the second cover plate 47 can be fitted so as to be substantially perpendicular to the vertical direction V when the gripping device 1 is in the closed configuration C.

The second cover plate 47 and first cover plate 46 can be fitted on top of one another and so as to be substantially parallel to one another.

The conveying apparatus for conveying the foodstuff, in addition to including at least one gripping device 1 and the programmable electronic control means, can further include a conveying robot for conveying the foodstuff. The robot includes a robotic arm, in particular an anthropomorphic robotic arm, connectable to the gripping device 1 to be able to grasp and convey the latter along a path, for example between the picking-up station and the releasing station. For example, the robotic arm can be configured to grasp a hooking element 50 provided in the gripping device 1. The hooking element 50 can include a circular plate 51 fitted to the support block 55, for example using a support element 52, for example shaped like a column. The circular plate 51 has a circumferential portion 53 that protrudes radially beyond the support element 52. The circumferential portion 53 can be designed to be grasped by the robotic arm, or to be fitted to the robotic arm.

The height values which, in use, the gripping device 1 has to attain are entered by the operator into the programmable electronic control means, which transforms the height values into coordinates that the programmable electronic control means sends, in use, to the conveying robot.

In use, the programmable electronic control means is configured to coordinate a movement of the pair of jaw elements 2a, 2b and of at least one group of finger elements, for example the group of finger elements 11, in particular of the pair of groups of finger elements 11, 13 in accordance with a movement of the robotic arm of the conveying robot between the picking-up station in which the gripping device 1 grasps the foodstuff and the releasing station in which the gripping device 1 releases the foodstuff.

One operational embodiment of the gripping device 1 and of the conveying apparatus provided with at least one such gripping device 1 will be illustrated below.

As disclosed previously, the values relating to the heights to which the gripping device 1 has to be taken by the conveying apparatus in the work steps are preliminarily first entered into the programmable electronic control means, in particular by the operator, in particular in the picking-up station, in the releasing station and along the path between the two stations. Such height values are based, in particular, on the height with respect to the ground on which the support plane is arranged, and on a height of the storage container inside which the foodstuff has to be unloaded, in order to avoid collisions therewith.

After this, when a foodstuff has to be picked up from the support plane, the gripping device 1 that is in the open configuration A, is taken by the conveying apparatus to a height that is suitable with respect to the support plane. At such a suitable height, a base of the foodstuff is substantially at the same height as the end zone 12a and as the further end zone 12b respectively of the first jaw element 2a and as the second jaw element 2b.

At this point, the first jaw element 2a and the second jaw element 2b are taken by the distance adjusting means 5 in the near position R to the set distance, for example by moving only one jaw element 2a; 2b along the approach direction E with respect to the other jaw element 2b; 2a or both the jaw elements 2a, 2b along the respective approach directions E.

When the distance L (measured by the distance measuring means 66) coincides with the set distance set by the operator in the programmable electronic control means for the near position R, the programmable electronic control means (or the operator if the latter is not provided) commands the distance adjusting means 5 to interrupt movement of the first jaw element 2a and/or of the second jaw element 2b (i.e. interrupts sliding of the stem 9).

If both the first jaw element 2a and the second jaw element 2b are moved, the portion travelled by the first jaw element 2a and by the second jaw element 2b can be, in particular, the same, owing, for example, to the centring unit 41.

When the first jaw element 2a and the second jaw element 2b are in the near position R they grasp the foodstuff on opposite sides.

At this point, the gripping device 1 is lifted, i.e. moved away from the support plane, in particular vertically upwards.

During lifting, or at the end of lifting (i.e. when the conveying device has reached a suitable height for the movement of the conveying device far from the picking-up station), the group of finger elements 11 and the further group of finger elements 13, even if the latter is present, are taken to the support operating configuration O. In this manner, the foodstuff is supported not only laterally but also below by the gripping device 1.

The gripping device 1 is thus in the closed configuration C.

The gripping device 1 is then moved by the conveying apparatus from the picking-up station, for example, to the releasing station, at which it is taken by the robotic arm to a further height that is suitable for the gripping device 1 being able to release the foodstuff.

In fact, after this further height has been reached, the group of finger elements 11 and the further group of finger elements 13, even if the latter is present, are taken from the support operating configuration O to the release configuration N and the first jaw element 2a and/or the second jaw element 2b are moved away from one another until they reach a (further) set distance in the distanced position D.

When the distance L (measured by the distance measuring means 66) coincides with the set distance set by the operator in the programmable electronic control means for the distanced position D, the programmable electronic control means (or the operator if the latter is not provided) commands the distance adjusting means 5 to interrupt movement of the first jaw element 2a and/or of the second jaw element 2b (i.e. interrupts sliding of the stem 9).

In order to take the first jaw element 2a and the second jaw element 2b to the distanced position D, it is possible to move only one jaw element 2a; 2b along the distancing direction F with respect to the other 2b; 2a or both the jaw elements 2a, 2b along the respective distancing directions F.

If both the first jaw element 2a and the second jaw element 2b are moved, the portion travelled by the first jaw element 2a and by the second jaw element 2b can be, in particular, the same, owing, for example, to the centring unit 41.

At this point, the gripping device 1 is again in the open configuration A and can be moved by the conveying apparatus to the picking-up station to pick up a further foodstuff, or to a rest station in which it can park, for example, to undergo maintenance. In the rest station, the gripping device 1 can be taken to a rest position in which the jaw elements 2a, 2b are in the near position R at a minimum distance L based on a thickness of the first jaw element 2a and of the second jaw element 2b, by the distance adjusting means 5, and the group of finger elements 11 and the further group of finger elements 13, even if the latter is present, are in the release configuration N. In this rest position, the gripping device 1 has minimum overall dimensions, in particular along a direction substantially perpendicular to the plane P.

Owing to the jaw elements 2a, 2b, to the distance adjusting means 5, to the at least one group of finger elements 11 and to the drive means 14, the gripping device 1 according to the invention is suitable for picking up a foodstuff from a support plane, in particular of a conveyor belt, and unloading the foodstuff completely automatically, without an operator having to convey the foodstuff from/to the gripping device 1 and/or from the picking-up station to the releasing station.

Further, owing to the conveying apparatus according to the invention, it is possible to move the gripping device 1 automatically, for example between the picking-up station and the releasing station.

Owing to the gripping device 1 and the conveying apparatus according to the invention, the operator is therefore prevented from being subjected to physical fatigue due to manual conveying of the foodstuff that can be very heavy for the operator. This also enables foodstuff movement operations to be speeded up.

Further, the gripping device 1, owing to the conformation of the jaw elements and of the finger elements, is extremely compact both in the closed configuration and in the open configuration.

From what has been disclosed above it is clear that the gripping device and the conveying apparatus achieve the set objects.

What has been said and shown in the attached drawings has been provided merely by way of illustration of the innovative features of the gripping device.

## Claims

1. Gripping device (1) configured to grasp and contain a foodstuff, in particular a cured meat such as a piece of speck or a piece of bacon or a ham, said gripping device (1) including:
- a pair of jaw elements (2a, 2b) intended to contain laterally said foodstuff and including a first jaw element (2a) and a second jaw element (2b), said first jaw element (2a) and said second jaw element (2b) being reciprocally connected and being movable in relation to one another;
- distance adjusting means (5), operationally associated with said pair of jaw elements (2a, 2b) and configured to adjust and maintain a distance (L) between said first jaw element (2a) and said second jaw element (2b), said distance adjusting means (5) being operationally connected to said first jaw element (2a) and/or to said second jaw element (2b) for moving at least one of said first jaw element (2a) and said second jaw element (2b) so as to take said jaw elements (2a, 2b) to a set distance and maintain said jaw elements (2a, 2b) at the set distance;
- at least one group of finger elements (11; 13) intended to support said foodstuff below and including a plurality of finger elements (11a,...11n; 13a,... 13n) movable between a release/non-operating configuration (N) in which they do not interact with said foodstuff and a support operating configuration (O) in which they support said foodstuff below, said finger elements (11a,... 11n; 13a,... 13n) being arranged near an end zone (12a; 12b) of said first jaw element (2a) and/or of said second jaw element (2b); and
- drive means (14) operationally associated with said at least one group of finger elements (11; 13) and configured to drive said finger elements (11a,...11n; 13a,...13n) between said release/non-operating configuration (N) and said support operating configuration (O);
wherein each finger element (11a,...11n; 13a,... 13n) of said at least one group of finger elements (11; 13) includes a cam-shaped first end (15) and said drive means (14) includes at least one rotation rod (16) connected to a first zone (17) of said first end (15), said first end (15) of each finger element (11a,...11n; 13a,... 13n) being rotatable around said rotation rod (16) when said finger elements (11a,... 11n; 13a,... 13n) are moved between said release/non-operating configuration (N) and said support operating configuration (O),
wherein said drive means (14) further includes at least one drive element (18) and a pulling/pushing rod (19) connected to a second zone (20) of each first end (15), said at least one drive element (18) being configured to pull or push said pulling/pushing rod (19) so as to cause a rotation of said finger elements (11a,... 11n; 13a,... 13n) around said rotation rod (16) alternatively in one rotation direction or in an opposite direction;
**characterized in that** said drive means (14) further includes a system of rods (24) arranged to connect said drive element (18) to said pulling/pushing rod (19), said system of rods (24) including at least one group of rods (25; 25, 32) provided with a plurality of rods (27; 27, 33) that extend with a prevalent dimension substantially vertically and alongside each other, each rod (27; 27, 33) including a first end zone (28) connected to said pulling/pushing rod (19) and a second end zone (30) connected to a further pulling/pushing rod (39), said further pulling/pushing rod (39) being connected to said drive element (18).

2. Gripping device (1) according to claim 1, wherein said first jaw element (2a) includes a first plate (3a) and said second jaw element (2b) includes a second plate (3b), at least one first inner zone of said first plate (3a) and a second inner zone of said second plate (3b) being flat and being arranged for contacting opposite parts of said foodstuff, once picked up, when said first jaw element (2a) and said second jaw element (2b) are in a near position (R).

3. Gripping device (1) according to claim 1 or 2, wherein said distance adjusting means (5) is configured to move at least one of said first jaw element (2a) and said second jaw element (2b) for a substantially rectilinear stroke along an approach direction (E) to decrease said distance (L) or along a distancing direction (F), opposite said approach direction (E), to increase said distance (L) so as to take said jaw elements (2a, 2b) to said set distance and to keep said jaw elements (2a, 2b) at said set distance, said distance adjusting means (5) including an actuating device (6) provided with a hollow body (7) including a head (8) operationally associated with said first jaw element (2a) and with a stem (9) an end portion of which is operationally associated with said second jaw element (2b), said stem (9) being slidable inside said hollow body (7) to move at least said second jaw element (2b) along said approach direction (E) or along said distancing direction (F).

4. Gripping device (1) according to claim 3, as appended to claim 2, wherein said head (8) is fitted to said first plate (3a) of said first jaw element (2a) and said end portion of said stem (9) is fitted to said second plate (3b) of said second jaw element (2b).

5. Gripping device (1) according to any one of the preceding claims, wherein said drive element (18) is a pneumatic actuator, in particular a pneumatic cylinder, and said further pulling/pushing rod (39) is connected to said drive element (18) by means of a fork element (31).

6. Gripping device (1) according to any one of the preceding claims, wherein said first plate (3a) and/or said second plate (3b) include a pair of flaps (37), the flaps (37) of each pair of flaps (37) being fitted facing one another, at least two portions said further pulling/pushing rod (39) being slidingly housed in a pair of respective openings (38), each opening (38) being obtained in a respective flap (37).

7. Gripping device (1) according to any one of the preceding claims, and further including a further group of finger elements (13; 11) shaped substantially like said group of finger elements (11; 13), said further group of finger elements (13; 11) including a plurality of further finger elements (13a, ...13n; 11a, ...11n) arranged substantially specularly to said finger elements (11a, ...11n; 13a, ...13n) and movable in coordination with said finger elements (11a, ...11n; 13a, ...13n) to promote the lower support of said foodstuff in synergy with said finger elements (11a, ...11n; 13a, ...13n).

8. Gripping device (1) according to any one of the preceding claims, and further including distance measuring means (66) arranged for measuring said distance (L) between said first jaw element (2a) and said second jaw element (2b) so as to stop the movement of said first jaw element (2a) and/or of said second jaw element (2b) by said distance adjusting means (5) when said distance (L) coincides with said set distance for a set work step.

9. Gripping device (1) according to claim 8, wherein said distance measuring means (66) includes a linear movement transducing device (67) configured to convert a corresponding movement of said first jaw element (2a) with respect to said second jaw element (2b) in a variation of a physical parameter that is proportional to the measurement of said distance (L), said linear movement transducing device (67) being provided with a frame (76) including a first end part (86) operationally associated with said first jaw element (2a), and with a cursor (96), which is slidable with respect to said frame (76) an end portion of which is operationally associated with said second jaw element (2b).

10. Gripping device (1) according to any one of the preceding claims, wherein said first jaw element (2a) and said second jaw element (2b) are movable by said distance adjusting means (5) along a respective stroke between a distanced position (D), in which said first jaw element (2a) and said second jaw element (2b) are distanced from said foodstuff, and said near position (R), in which said first jaw element (2a) and said second jaw element (2b) are nearer said foodstuff than when they are in said distanced position (D), said gripping device (1) further including a centring unit (41) configured to ensure that the stroke travelled by said first jaw element (2a) and the stroke travelled by said second jaw element (2b) are substantially the same.

11. Gripping device (1) according to claim 10, wherein said centring unit (41) includes a rotating table (42) that is rotatable around a substantially vertical rotation axis (T), and a pair of tie rods (43), each tie rod (43) being connected rotatably on one side to a face (44) of said rotating table (42) and on the other side to a respective jaw element (2a, 2b), said rotating table (42) being rotated when said first jaw element (2a) and said second jaw element (2b) are moved and said tie rods (43) being fitted to said face (44) so as to enable said first jaw element (2a) and said second jaw element (2b) to move along a same stroke.

12. Gripping device (1) according to claim 10, wherein said centring unit (41) includes a ring gear, in particular a cogwheel that is rotatable around a substantially vertical rotation axis, and a pair of linear gears, in particular a pair of racks, each linear gear being provided with a plurality of teeth arranged for engaging a plurality of further teeth provided in said ring gear and being on the one side coupled with said ring gear and on the other side connected to a respective jaw element (2a, 2b), said ring gear being rotated when said first jaw element (2a) and said second jaw element (2b) are moved and said linear gears being coupled with said ring gear so as to enable said first jaw element (2a) and said second jaw element (2b) to move along a same stroke.

13. Gripping device (1) according to any one of the preceding claims, and further including a cover device (45) arranged to cover said foodstuff above when said foodstuff is grasped by said gripping device (1), said cover device (45) including at least one first cover plate (46) fitted to either said first plate (3a) or said second plate (3b).

14. Gripping device (1) according to claim 13, and further including a second cover plate (47) fitted to one of said first plate (3a) and said second plate (3b) to which said first cover plate (46) is not fitted, said second cover plate (47) and said first cover plate (46) being fitted on top of one another and so as to be substantially parallel to one another.

15. Conveying apparatus for conveying a foodstuff including at least one gripping device (1) according to any one of claims 1 to 14 and a conveying robot for conveying said foodstuff including a robotic arm connected to said gripping device (1) for moving said gripping device (1) between a picking-up station in which it grasps said foodstuff and a releasing station in which said gripping device (1) releases said foodstuff, said conveying apparatus further including programmable electronic control means configured to coordinate a movement of a pair of jaw elements (2a, 2b) of said gripping device (1) and of at least one group of finger elements (11, 13) of said gripping device (1) according to a movement of said robotic arm of said conveying robot between said picking-up station and said releasing station.

## Patentansprüche

1. Greifvorrichtung (1), die dazu konfiguriert ist, ein Nahrungsmittel, insbesondere ein gepökeltes Fleisch wie etwa ein Stück Speck oder ein Stück Bacon oder einen Schinken, zu greifen und festzuhalten, wobei die Greifvorrichtung (1) einschließt:
- ein Paar Backenelemente (2a, 2b), die dazu bestimmt sind, das Nahrungsmittel seitlich aufzunehmen, und die ein erstes Backenelement (2a) und ein zweites Backenelement (2b) einschließen, wobei das erste Backenelement (2a) und das zweite Backenelement (2b) miteinander verbunden und relativ zueinander beweglich sind;
- ein Abstandseinstellmittel (5), das operativ mit dem Paar Backenelemente (2a, 2b) verbunden ist und dazu konfiguriert ist, einen Abstand (L) zwischen dem ersten Backenelement (2a) und dem zweiten Backenelement (2b) einzustellen und aufrechtzuerhalten, wobei das Abstandseinstellmittel (5) operativ mit dem ersten Backenelement (2a) und/oder dem zweiten Backenelement (2b) verbunden ist, um mindestens eines der Backenelemente (2a) und/oder des zweiten Backenelements (2b) zu bewegen, um die Backenelemente (2a, 2b) auf einen eingestellten Abstand zu bringen und die Backenelemente (2a, 2b) auf dem eingestellten Abstand zu halten;
- mindestens eine Gruppe von Fingerelementen (11; 13), die dazu bestimmt sind, das Nahrungsmittel von unten zu stützen, und die eine Vielzahl von Fingerelementen (11a, ... 11n; 13a, ... 13n) einschließen, die zwischen einer Freigabe-/Nichtbetriebskonfiguration (N), in der sie nicht mit dem Nahrungsmittel interagieren, und einer Stützbetriebskonfiguration (O), in der sie das Nahrungsmittel darunter stützen, beweglich sind, wobei die Fingerelemente (11a, ... 11n; 13a,... 13n) in der Nähe einer Endzone (12a; 12b) des ersten Backenelements (2a) und/oder des zweiten Backenelements (2b) angeordnet ist; und
- Antriebsmittel (14), die operativ mit der mindestens einen Gruppe von Fingerelementen (11; 13) verbunden sind und zum Antreiben der Fingerelemente (11a,... 11n; 13a,... 13n) zwischen der Freigabe-/Nichtbetriebskonfiguration (N) und der Unterstützungsbetriebskonfiguration (O) konfiguriert sind;
wobei jedes Fingerelement (11a,... 11n; 13a,... 13n) der mindestens einen Gruppe von Fingerelementen (11; 13) ein nockenförmiges erstes Ende (15) einschließt und die Antriebseinrichtung (14) mindestens eine Drehstange (16) einschließt, die mit einer ersten Zone (17) des ersten Endes (15) verbunden ist, wobei das erste Ende (15) jedes Fingerelements (11a, ... 11n; 13a, ... 13n), um die Drehstange (16) drehbar ist, wenn die Fingerelemente (11a, ... 11n; 13a,... 13n) zwischen der Freigabe-/Nichtbetriebskonfiguration (N) und der Unterstützungsbetriebskonfiguration (O) bewegt werden,
wobei das Antriebsmittel (14) ferner mindestens ein Antriebselement (18) und eine Zug-/Druckstange (19) einschließt, die mit einer zweiten Zone (20) jedes ersten Endes (15) verbunden ist, wobei das mindestens eine Antriebselement (18) so konfiguriert ist, dass es die Zug-/Druckstange (19) zieht oder drückt, um eine Drehung der Fingerelemente (11a,... 11n; 13a,... 13n) um die Drehstange (16) abwechselnd in einer Drehrichtung oder in einer entgegengesetzten Richtung zu bewirken;
**dadurch gekennzeichnet, dass** das Antriebsmittel (14) ferner ein Stangensystem (24) einschließt, das das Antriebselement (18) mit der Zug-/Druckstange (19) verbindet, wobei das Stangensystem (24) mindestens eine Stangengruppe (25; 25, 32) umfasst, die mit einer Vielzahl von Stangen (27; 27, 33) versehen ist, die sich mit einer vorherrschenden Abmessung im Wesentlichen vertikal und nebeneinander erstrecken, wobei jede Stange (27; 27, 33) eine erste Endzone (28) einschließt die mit der Zug-/Druckstange (19) verbunden ist, und eine zweite Endzone (30) einschließt, die mit einer weiteren Zug-/Druckstange (39) verbunden ist, wobei die weitere Zug-/Druckstange (39) mit dem Antriebselement (18) verbunden ist.

2. Greifvorrichtung (1) nach Anspruch 1, wobei das erste Backenelement (2a) eine erste Platte (3a) und das zweite Backenelement (2b) eine zweite Platte (3b) einschließt, wobei mindestens eine erste Innenzone der ersten Platte (3a) und eine zweite Innenzone der zweiten Platte (3b) flach sind und so angeordnet sind, dass sie nach dem Aufnehmen gegenüberliegende Teile des Nahrungsmittels berühren, wenn sich das erste Backenelement (2a) und das zweite Backenelement (2b) in einer nahen Position (R) befinden.

3. Greifvorrichtung (1) nach Anspruch 1 oder 2, wobei die Abstandseinstelleinrichtung (5) dazu konfiguriert ist, mindestens eines der Backenelemente (2a) und/oder des zweiten Backenelements (2b) um einen im Wesentlichen geradlinigen Hub entlang einer Annäherungsrichtung (E) zu bewegen, um den Abstand (L) zu verringern, oder entlang einer der Annäherungsrichtung (E) entgegengesetzten Entfernungsrichtung (F), um den Abstand (L) zu vergrößern, um die Backenelemente (2a, 2b) auf den eingestellten Abstand zu bringen und die Backenelemente (2a, 2b) auf dem eingestellten Abstand zu halten, wobei die Abstandseinstelleinrichtung (5) eine Betätigungsvorrichtung (6) einschließt, die mit einem Hohlkörper (7) versehen ist, der einen Kopf (8) einschließt, der betriebsmäßig mit dem ersten Backenelement (2a) verbunden ist, und mit einem Schaft (9), dessen Endabschnitt betriebsmäßig mit dem zweiten Backenelement (2b) verbunden ist, wobei der Schaft (9) im Hohlkörper (7) verschiebbar ist, um mindestens das zweite Backenelement (2b) entlang der Annäherungsrichtung (E) oder entlang der Entfernungsrichtung (F) zu bewegen.

4. Greifvorrichtung (1) nach Anspruch 3, wie zu Anspruch 2 angefügt, wobei der Kopf (8) an der ersten Platte (3a) des ersten Backenelements (2a) befestigt und der Endabschnitt des Schafts (9) an der zweiten Platte (3b) des zweiten Backenelements (2b) befestigt ist.

5. Greifvorrichtung (1) nach einem der vorstehenden Ansprüche, wobei das Antriebselement (18) ein pneumatischer Aktuator, insbesondere ein pneumatischer Zylinder ist und die weitere Zug-/Druckstange (39) über ein Gabelelement (31) mit dem Antriebselement (18) verbunden ist.

6. Greifvorrichtung (1) nach einem der vorstehenden Ansprüche, wobei die erste Platte (3a) und/oder die zweite Platte (3b) ein Paar Klappen (37) einschließen, wobei die Klappen (37) jedes Klappenpaars (37) einander zugewandt angebracht sind und mindestens zwei Abschnitte der weiteren Zug-/Druckstange (39) verschiebbar in einem Paar entsprechender Öffnungen (38) aufgenommen sind, wobei sich jede Öffnung (38) in einer entsprechenden Klappe (37) befindet.

7. Greifvorrichtung (1) nach einem der vorstehenden Ansprüche, die ferner eine weitere Gruppe von Fingerelementen (13; 11) einschließt, die im Wesentlichen wie die Gruppe von Fingerelementen (11; 13) geformt sind, wobei die weitere Gruppe von Fingerelementen (13; 11) eine Vielzahl weiterer Fingerelemente (13a, ...13n; 11a, ...11n) einschließt, die im Wesentlichen spiegelbildlich zu den Fingerelementen (11a, ...11n; 13a, ...13n) angeordnet sind und in Koordination mit den Fingerelementen (11a, ... 11n; 13a, ... 13n) verschiebbar sind, um in Synergie mit den Fingerelementen (11a, ...11n; 13a, ...13n) die untere Unterstützung des Nahrungsmittels zu fördern.

8. Greifvorrichtung (1) nach einem der vorstehenden Ansprüche, die ferner eine Abstandsmesseinrichtung (66) einschließt, die zum Messen des Abstands (L) zwischen dem ersten Backenelement (2a) und dem zweiten Backenelement (2b) angeordnet ist, um die Bewegung des ersten Backenelements (2a) und/oder des zweiten Backenelements (2b) durch die Abstandseinstelleinrichtung (5) zu stoppen, wenn der Abstand (L) mit dem eingestellten Abstand für einen eingestellten Arbeitsschritt übereinstimmt.

9. Greifvorrichtung (1) nach Anspruch 8, wobei die Abstandsmesseinrichtung (66) eine lineare Bewegungswandlervorrichtung (67) einschließt, die dazu konfiguriert ist, eine entsprechende Bewegung des ersten Backenelements (2a) in Bezug auf das zweite Backenelement (2b) in eine Änderung eines physikalischen Parameters umzuwandeln, die proportional zur Messung des Abstands (L) ist, wobei die lineare Bewegungswandlervorrichtung (67) mit einem Rahmen (76) versehen ist, der ein erstes Endteil (86) einschließt, das operativ mit dem ersten Backenelement (2a) verbunden ist, und mit einem Cursor (96), der in Bezug auf den Rahmen (76) verschiebbar ist, wobei ein Endteil davon operativ mit dem zweiten Backenelement (2b) verbunden ist.

10. Greifvorrichtung (1) nach einem der vorstehenden Ansprüche, wobei das erste Backenelement (2a) und das zweite Backenelement (2b) durch die Abstandseinstelleinrichtung (5) entlang eines jeweiligen Hubs zwischen einer Distanzposition (D), in der das erste Backenelement (2a) und das zweite Backenelement (2b) von dem Nahrungsmittel beabstandet sind, und der Nahposition (R), in der das erste Backenelement (2a) und das zweite Backenelement (2b) dem Nahrungsmittel näher sind als in der Distanzposition (D), bewegbar sind, wobei die Greifvorrichtung (1) ferner eine Zentriereinheit (41) einschließt, die dazu konfiguriert ist, sicherzustellen, dass der Hub des ersten Backenelements (2a) und der Hub des zweiten Backenelements (2b) im Wesentlichen gleich sind.

11. Greifvorrichtung (1) nach Anspruch 10, wobei die Zentriereinheit (41) einen Drehtisch (42), der um eine im Wesentlichen vertikale Drehachse (T) drehbar ist, und ein Paar Zugstangen (43) einschließt, wobei jede Zugstange (43) auf der einen Seite drehbar mit einer Fläche (44) des Drehtisches (42) und auf der anderen Seite mit einem jeweiligen Backenelement (2a, 2b) verbunden ist, wobei der Drehtisch (42) gedreht wird, wenn das erste Backenelement (2a) und das zweite Backenelement (2b) bewegt werden, und wobei die Zugstangen (43) an der Fläche (44) angebracht sind, um dem ersten Backenelement (2a) und dem zweiten Backenelement (2b) zu ermöglichen, sich entlang eines gleichen Hubs zu bewegen.

12. Greifvorrichtung (1) nach Anspruch 10, wobei die Zentriereinheit (41) ein Hohlrad, insbesondere ein Zahnrad, das um eine im Wesentlichen vertikale Drehachse drehbar ist, und ein Paar Linearzahnräder, insbesondere ein Paar Zahnstangen, einschließt, wobei jedes Linearzahnrad mit einer Vielzahl von Zähnen versehen ist, die zum Eingriff mit einer Vielzahl weiterer Zähne in dem Hohlrad angeordnet sind und auf der einen Seite mit dem Hohlrad und auf der anderen Seite mit einem jeweiligen Backenelement (2a, 2b) gekoppelt sind, wobei das Hohlrad gedreht wird, wenn das erste Backenelement (2a) und das zweite Backenelement (2b) bewegt werden, und die Linearzahnräder mit dem Hohlrad gekoppelt sind, um dem ersten Backenelement (2a) und dem zweiten Backenelement (2b) die Bewegung entlang eines gleichen Hubs zu ermöglichen.

13. Greifvorrichtung (1) nach einem der vorstehenden Ansprüche, die ferner eine Abdeckvorrichtung (45) einschließt, die so angeordnet ist, dass sie das Lebensmittel darüber abdeckt, wenn das Lebensmittel von der Greifvorrichtung (1) gegriffen wird, wobei die Abdeckvorrichtung (45) mindestens eine erste Abdeckplatte (46) einschließt, die entweder an der ersten Platte (3a) oder der zweiten Platte (3b) angebracht ist.

14. Greifvorrichtung (1) nach Anspruch 13, die ferner eine zweite Abdeckplatte (47) einschließt, die an einer der ersten Platte (3a) und der zweiten Platte (3b) angebracht ist, an der die erste Abdeckplatte (46) nicht angebracht ist, wobei die zweite Abdeckplatte (47) und die erste Abdeckplatte (46) übereinander angebracht sind und im Wesentlichen parallel zueinander verlaufen.

15. Fördervorrichtung zum Fördern eines Nahrungsmittels, die mindestens eine Greifvorrichtung (1) nach einem der Ansprüche 1 bis 14 und einen Förderroboter zum Fördern des Nahrungsmittels einschließt, der einen mit der Greifvorrichtung (1) verbundenen Roboterarm zum Bewegen der Greifvorrichtung (1) zwischen einer Aufnahmestation, in der sie das Nahrungsmittel greift, und einer Freigabestation, in der die Greifvorrichtung (1) das Nahrungsmittel freigibt, aufweist, wobei die Fördervorrichtung ferner programmierbare elektronische Steuermittel einschließt, die zum Koordinieren einer Bewegung eines Paars Backenelemente (2a, 2b) der Greifvorrichtung (1) und mindestens einer Gruppe von Fingerelementen (11, 13) der Greifvorrichtung (1) entsprechend einer Bewegung des Roboterarms des Förderroboters zwischen der Aufnahmestation und der Freigabestation konfiguriert sind.

## Revendications

1. Dispositif de préhension (1) conçu pour saisir et contenir une denrée alimentaire, en particulier une viande séchée comme un morceau de speck ou un morceau de bacon ou de jambon, ledit dispositif de préhension (1) comportant :
- une paire d'éléments de mâchoire (2a, 2b) destinés à contenir latéralement ladite denrée alimentaire et comportant un premier élément de mâchoire (2a) et un second élément de mâchoire (2b), ledit premier élément de mâchoire (2a) et ledit second élément de mâchoire (2b) étant reliés réciproquement et pouvant être déplacés l'un par rapport à l'autre ;
- un moyen de réglage de distance (5), associé de manière fonctionnelle à ladite paire d'éléments de mâchoire (2a, 2b) et conçu pour régler et maintenir une distance (L) entre ledit premier élément de mâchoire (2a) et ledit second élément de mâchoire (2b), ledit moyen de réglage de distance (5) est relié de manière fonctionnelle audit premier élément de mâchoire (2a) et/ou audit second élément de mâchoire (2b) pour déplacer au moins l'un parmi ledit premier élément de mâchoire (2a) et ledit second élément de mâchoire (2b) de manière à amener lesdits éléments de mâchoire (2a, 2b) à une distance définie et à maintenir lesdits éléments de mâchoire (2a, 2b) à la distance définie ;
- au moins un groupe d'éléments de doigt (11; 13) destiné à soutenir ladite denrée alimentaire en dessous et comportant une pluralité d'éléments de doigts (11a,... 11n; 13a,... 13n) mobiles entre une configuration de désolidarisation/non-fonctionnelle (N) dans laquelle ils n'interagissent pas avec ladite denrée alimentaire et une configuration fonctionnelle de soutien (O) dans laquelle ils soutiennent ladite denrée alimentaire en dessous, lesdits éléments de doigts (11a,... 11n; 13a,... 13n) à proximité d'une zone d'extrémité (12a; 12b) dudit premier élément de mâchoire (2a) et/ou dudit second élément de mâchoire (2b) ; et
- un moyen d'entraînement (14) associé de manière fonctionnelle audit au moins un groupe d'éléments de doigt (11; 13) et conçus pour entraîner lesdits éléments de doigt (11a,... 11n; 13a,... 13n) entre ladite configuration de libération/non-fonctionnelle (N) et ladite configuration d'opération du soutien (O) ;
dans lequel chaque élément de doigt (11a,... 11n; 13a,... 13n) dudit au moins un groupe d'éléments de doigt (11; 13) comporte une première extrémité (15) en forme de came et ledit moyen d'entraînement (14) comporte au moins une tige de rotation (16) reliée à une première zone (17) de ladite première extrémité (15), ladite première extrémité (15) de chaque élément de doigt (11a,...11n; 13a,... 13n) pouvant tourner autour de ladite tige de rotation (16) lorsque lesdits éléments de doigt (11a,... 11n; 13a,... 13n) sont déplacés entre ladite configuration de libération/non-fonctionnelle (N) et ladite configuration d'opération du soutien (O),
dans lequel ledit moyen d'entraînement (14) comporte en outre au moins un élément d'entraînement (18) et une tige de traction/poussée (19) reliée à une seconde zone (20) de chaque première extrémité (15), ledit au moins un élément d'entraînement (18) étant conçu pour tirer ou pousser ladite tige de traction/poussée (19) de manière à provoquer une rotation desdits éléments de doigt (11a,... 11n; 13a,... 13n) autour de ladite tige de rotation (16) alternativement dans un sens de rotation ou dans un sens opposé ;
**caractérisé en ce que** ledit moyen d'entraînement (14) comporte en outre un système de tiges (24) disposé pour relier ledit élément d'entraînement (18) à ladite tige de traction/poussée (19), ledit système de tiges (24) comportant au moins un groupe de tiges (25; 25, 32) doté d'une pluralité de tiges (27; 27, 33) qui s'étendent avec une dimension prévalente sensiblement verticale et l'une à côté de l'autre, chaque tige (27; 27, 33) comportant une première zone d'extrémité (28) reliée à ladite tige de traction/poussée (19) et une seconde zone d'extrémité (30) reliée à une autre tige de traction/poussée (39), ladite autre tige de traction/poussée (39) étant reliée audit élément d'entraînement (18).

2. Dispositif de préhension (1) selon la revendication 1, dans lequel ledit premier élément de mâchoire (2a) comporte une première plaque (3a) et ledit second élément de mâchoire (2b) comporte une seconde plaque (3b), au moins une première zone intérieure de ladite première plaque (3a) et une seconde zone intérieure de ladite seconde plaque (3b) étant plates et disposées pour entrer en contact avec des parties opposées de ladite denrée alimentaire, une fois saisie, lorsque ledit premier élément de mâchoire (2a) et ledit second élément de mâchoire (2b) sont dans une position rapprochée (R).

3. Dispositif de préhension (1) selon la revendication 1 ou 2, dans lequel ledit moyen de réglage de distance (5) est conçu pour déplacer au moins l'un parmi ledit premier élément de mâchoire (2a) et ledit second élément de mâchoire (2b) selon une course sensiblement rectiligne le long d'une direction d'approche (E) pour diminuer ladite distance (L) ou le long d'une direction d'éloignement (F), opposée à ladite direction d'approche (E), pour augmenter ladite distance (L) de manière à amener lesdits éléments de mâchoire (2a, 2b) à ladite distance définie et à maintenir lesdits éléments de mâchoire (2a, 2b) à ladite distance définie, ledit moyen de réglage de distance (5) comportant un dispositif d'actionnement (6) pourvu d'un corps creux (7) comportant une tête (8) associée de manière fonctionnelle audit premier élément de mâchoire (2a) et d'une tige (9) dont une partie d'extrémité est associée de manière fonctionnelle audit second élément de mâchoire (2b), ladite tige (9) pouvant coulisser à l'intérieur dudit corps creux (7) pour déplacer au moins ledit second élément de mâchoire (2b) le long de ladite direction d'approche (E) ou le long de ladite direction d'éloignement (F).

4. Dispositif de préhension (1) selon la revendication 3, tel qu'annexé à la revendication 2, dans lequel ladite tête (8) est fixée à ladite première plaque (3a) dudit premier élément de mâchoire (2a) et ladite partie d'extrémité de ladite tige (9) est fixée à ladite seconde plaque (3b) dudit second élément de mâchoire (2b).

5. Dispositif de préhension (1) selon l'une quelconque des revendications précédentes, dans lequel ledit élément d'entraînement (18) est un actionneur pneumatique, en particulier un cylindre pneumatique, et ladite autre tige de traction/poussée (39) est reliée audit élément d'entraînement (18) au moyen d'un élément de fourche (31).

6. Dispositif de préhension (1) selon l'une quelconque des revendications précédentes, dans lequel ladite première plaque (3a) et/ou ladite seconde plaque (3b) comportent une paire de rabats (37), les rabats (37) de chaque paire de rabats (37) étant montés l'un en face de l'autre, au moins deux portions de ladite autre tige de traction/poussée (39) étant logées de manière coulissante dans une paire d'ouvertures respectives (38), chaque ouverture (38) étant obtenue dans un rabat respectif (37).

7. Dispositif de préhension (1) selon l'une quelconque des revendications précédentes, et comportant en outre un autre groupe d'éléments de doigts (13; 11) dont la forme est sensiblement identique à celle dudit groupe d'éléments de doigts (11; 13), ledit autre groupe d'éléments de doigt (13; 11) comportant une pluralité d'autres éléments de doigts (13a, ...13n; 11a, ...11n) disposés de manière sensiblement spéculaire par rapport auxdits éléments de doigt (11a, ...11n; 13a, ...13n) et mobiles en coordination avec lesdits éléments de doigts (11a, .... 11n; 13a, ... 13n) pour favoriser le soutien inférieur de ladite denrée alimentaire en synergie avec lesdits éléments à doigts (11a, ...11n; 13a, ...13n).

8. Dispositif de préhension (1) selon l'une quelconque des revendications précédentes, et comportant en outre un moyen de mesure de distance (66) disposé pour mesurer ladite distance (L) entre ledit premier élément de mâchoire (2a) et ledit second élément de mâchoire (2b) de manière à arrêter le mouvement dudit premier élément de mâchoire (2a) et/ou dudit second élément de mâchoire (2b) par ledit moyen de réglage de distance (5) lorsque ladite distance (L) coïncide avec ladite distance définie pour une étape de travail définie.

9. Dispositif de préhension (1) selon la revendication 8, dans lequel ledit moyen de mesure de distance (66) comporte un dispositif de transduction de mouvement linéaire (67) conçu pour convertir un mouvement correspondant dudit premier élément de mâchoire (2a) par rapport audit second élément de mâchoire (2b) en une variation d'un paramètre physique qui est proportionnelle à la mesure de ladite distance (L), ledit dispositif de transduction de mouvement linéaire (67) est pourvu d'un cadre (76) comportant une première partie d'extrémité (86) associée de manière fonctionnelle audit premier élément de mâchoire (2a), et d'un curseur (96) coulissant par rapport audit cadre (76) dont une partie d'extrémité est associée de manière fonctionnelle audit second élément de mâchoire (2b).

10. Dispositif de préhension (1) selon l'une quelconque des revendications précédentes, dans lequel ledit premier élément de mâchoire (2a) et ledit second élément de mâchoire (2b) sont déplacés par ledit moyen de réglage de distance (5) le long d'une course respective entre une position éloignée (D), dans laquelle ledit premier élément de mâchoire (2a) et ledit second élément de mâchoire (2b) sont éloignés de ladite denrée alimentaire, et ladite position rapprochée (R), dans laquelle ledit premier élément de mâchoire (2a) et ledit second élément de mâchoire (2b) sont plus proches de ladite denrée alimentaire que lorsqu'ils sont dans ladite position éloignée (D), ledit dispositif de préhension (1) comportant en outre une unité de centrage (41) conçue pour garantir que la course parcourue par ledit premier élément de mâchoire (2a) et la course parcourue par ledit second élément de mâchoire (2b) sont sensiblement identiques.

11. Dispositif de préhension (1) selon la revendication 10, dans lequel ladite unité de centrage (41) comporte un plateau tournant (42) qui peut tourner autour d'un axe de rotation (T) sensiblement vertical, et une paire de tirants (43), chaque tirant (43) étant relié de manière rotative d'un côté à une face (44) dudit plateau tournant (42) et de l'autre côté à un élément de mâchoire respectif (2a, 2b), ledit plateau tournant (42) étant mis en rotation lorsque ledit premier élément de mâchoire (2a) et ledit second élément de mâchoire (2b) sont déplacés et lesdits tirants (43) étant fixés à ladite face (44) de manière à permettre audit premier élément de mâchoire (2a) et audit second élément de mâchoire (2b) de se déplacer le long d'une même course.

12. Dispositif de préhension (1) selon la revendication 10, dans lequel ladite unité de centrage (41) comporte une couronne dentée, en particulier une roue dentée rotative autour d'un axe de rotation sensiblement vertical, et une paire d'engrenages linéaires, en particulier une paire de crémaillères, chaque engrenage linéaire étant pourvu d'une pluralité de dents disposées pour venir en prise dans une pluralité d'autres dents prévues dans ladite couronne dentée et étant d'un côté accouplé à ladite couronne dentée et de l'autre côté relié à un élément de mâchoire respectif (2a, 2b), ladite couronne dentée étant mise en rotation lorsque ledit premier élément de mâchoire (2a) et ledit second élément de mâchoire (2b) sont déplacés et lesdits engrenages linéaires étant accouplés à ladite couronne dentée de manière à permettre audit premier élément de mâchoire (2a) et audit second élément de mâchoire (2b) de se déplacer le long d'une même course.

13. Dispositif de préhension (1) selon l'une quelconque des revendications précédentes, et comportant en outre un dispositif de recouvrement (45) disposé pour recouvrir ladite denrée alimentaire au-dessus lorsque celle-ci est saisie par ledit dispositif de préhension (1), ledit dispositif de recouvrement (45) comportant au moins une première plaque de recouvrement (46) fixée soit à ladite première plaque (3a), soit à ladite seconde plaque (3b).

14. Dispositif de préhension (1) selon la revendication 13, comportant en outre une seconde plaque de recouvrement (47) fixée à l'une parmi ladite première plaque (3a) et ladite seconde plaque (3b) à laquelle ladite première plaque de recouvrement (46) n'est pas fixée, ladite seconde plaque de recouvrement (47) et ladite première plaque de recouvrement (46) étant fixées l'une sur l'autre et de manière à être sensiblement parallèles l'une par rapport à l'autre.

15. Appareil de transport pour le transport d'une denrée alimentaire comportant au moins un dispositif de préhension (1) selon l'une quelconque des revendications 1 à 14 et un robot de transport pour le transport de ladite denrée alimentaire comportant un bras robotisé relié audit dispositif de préhension (1) pour déplacer ledit dispositif de préhension (1) entre un poste de saisie dans lequel **il** saisit ladite denrée alimentaire et un poste de libération dans lequel ledit dispositif de préhension (1) libère ladite denrée alimentaire, ledit appareil de transport comportant en outre un moyen de commande électronique programmable configuré pour coordonner un mouvement d'une paire d'éléments de mâchoire (2a, 2b) dudit dispositif de préhension (1) et d'au moins un groupe d'éléments de doigt (11, 13) dudit dispositif de préhension (1) en fonction d'un mouvement dudit bras robotique dudit robot de transport entre ladite station de prise et ladite station de libération.
